# EUROPÄISCHE PATENTSCHRIFT

(11) **EP 0 433 223 B1**
(45) Veröffentlichungstag und Bekanntmachung des Hinweises auf die Patenterteilung: **02.11.1994**
(21) Anmeldenummer: 90810903.6
(22) Anmeldetag: 22.11.1990
(51) Int. Cl.: B01J 35/04

(54) **Katalysatorkörper und Reaktor für heterogene Reaktionsführung**
Catalytic structure and reactor for heterogeneous reactions
Corps de catalyseur et réacteur pour des réactions hétérogènes

(30) Priorität: 11.12.1989 CH 4447/89
(43) Veröffentlichungstag der Anmeldung: 19.06.1991
(73) Patentinhaber: Sulzer Chemtech AG, CH-8404 Winterthur (CH)
(72) Erfinder: Stringaro, Jean-Paul, Dr., CH-8180 Bülach (CH)
(74) Vertreter: Hammer, Bruno Dr.

(56) Entgegenhaltungen:
- EP-A- 0 025 308
- EP-A- 0 149 912
- US-A- 4 382 323

## Beschreibung

Die Erfindung betrifft einen Katalysatorkörper und einen Reaktor für heterogene katalytische Reaktionsführung. Es sind verschiedene derartige Reaktoren bzw. Katalysatorkörper bekannt z.B. in Form von Schüttungen, von Monolithen, meist aus extrudierten Strukturen mit parallelen Kanälen oder von aufgerollten Wellstrukturen. Diese bekannten Katalysatorkörper und Reaktoren weisen aber noch erhebliche Nachteile auf. So treten hohe Druckabfälle (bei Schüttungen), schlechte radiale Vermischung, inhomogene Konzentrationsprofile und oft auch äusserst unerwünschter Schlupf (bei Monolithen) auf. Gute Katalysatorkörper sind überdies oft noch sehr aufwendig und teuer herzustellen.

Aufgabe der Erfindung ist es daher, einen Katalysatorkörper bzw. einen Reaktor zu schaffen, welche diese Nachteile weitgehend überwinden und sich insbesondere auch für katalytische Reaktionen mit relativ geringer Wärmetönung eignen. Dabei sollen gleichzeitig geringer Druckabfall, sehr gute radiale Vermischung und homogene Konzentrationsprofile unter weitgehender Verhinderung jeden Schlupfs auf einfache und kostengünstige Art erreicht werden.

Diese Aufgabe wird erfindungsgemäss gelöst durch einen Katalysatorkörper mit den Merkmalen von Anspruch 1 und durch einen Reaktor nach Anspruch 9. Durch die statische Mischerform der Trägerstruktur mit grosser Oberfläche wird eine effiziente, optimale Vermischung und Homogenisierung der katalytischen Reaktion erreicht, und die Kombination dieser Struktur mit einer Washcoat-Beschichtung ergibt eine starke Vergrösserung der Reaktionsfläche und somit insgesamt auf einfache Art eine kostengünstige und effiziente Katalysatorwirkung.

Die abhängigen Ansprüche beziehen sich auf besonders vorteilhafte Ausführungsformen und Weiterentwicklungen der Erfindung. Dabei können geeignete Formen der Trägerstruktur einen Neigungswinkel W der statischen Mischelemente zur Hauptströmungsrichtung Z von mindestens 10° aufweisen oder die Trägerstruktur kann aus in parallelen Lagen angeordneten, wellenförmigen Schichten. Eine besonders einfache Herstellung kann mit einer Trägerstruktur aus einem Stück erreicht werden. Je nach Anwendung können einfache Trägerstrukturen aus einem Metallskelett, beispielsweise aus rostfreien Stahlblechen, oder auch aus Vollkeramik-Material gebildet werden. Die Washcoat-Beschichtung kann Erdalkali- und/oder Uebergangsmetalloxyde und speziell auch Aluminiumoxyd aufweisen. Gute Reaktionsverhältnisse der Washcoat-Beschichtung können mit spezifischen Oberflächen von 20 bis 200 m²/g und mit Oberflächenvergrösserungen von 100 bis 100 000 m²/m² bezogen auf die geometrische Fläche erreicht werden. Bei einem Reaktor mit erfindungsgemässem Katalysatorkörper kann der Körper auch mehrere Abschnitte aufweisen, wobei zwischen den Abschnitten mindestens ein Wärmetauscher angeordnet sein kann. Damit können auch erhöhte Wärmetönungen beherrscht werden.

Im folgenden wird die Erfindung anhand von Beispielen und Figuren näher erläutert. Es zeigt:
- Fig. 1: einen erfindungsgemässen Reaktor mit Katalysatorkörper;
- Fig. 2: einen Aufbau der statischen Mischerelemente mit Washcoat-Beschichtung und Katalysator;
- Fig. 3: eine Trägerstruktur aus wellenförmigen Schichten in parallelen Lagen;
- Fig. 4: einen Konzentrationsverlauf im Vergleich mit bisherigen Reaktoren;
- Fig. 5: einen Katalysatorkörper mit mehreren Abschnitten und Wärmetauscher.

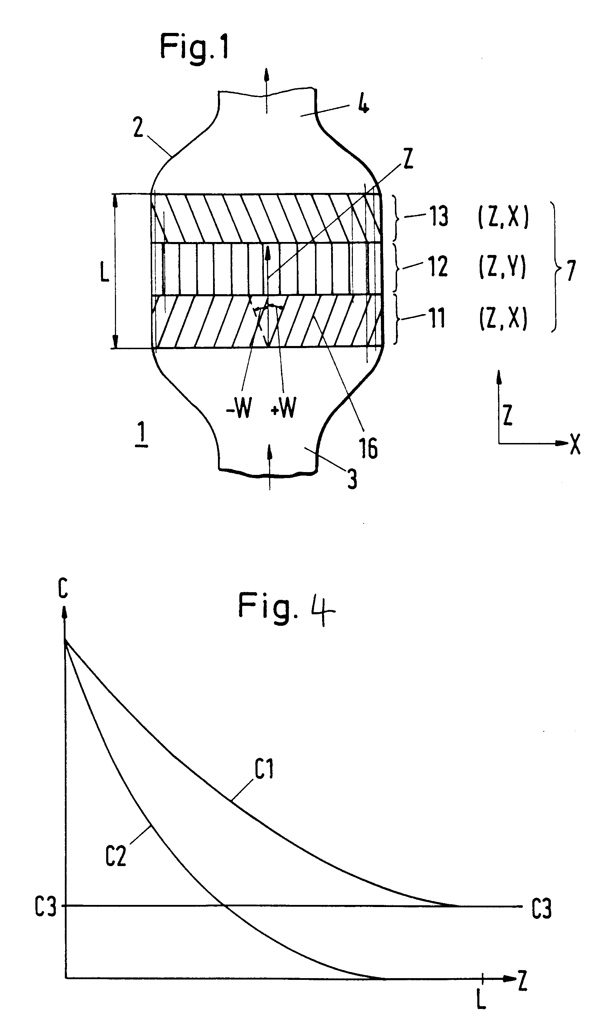

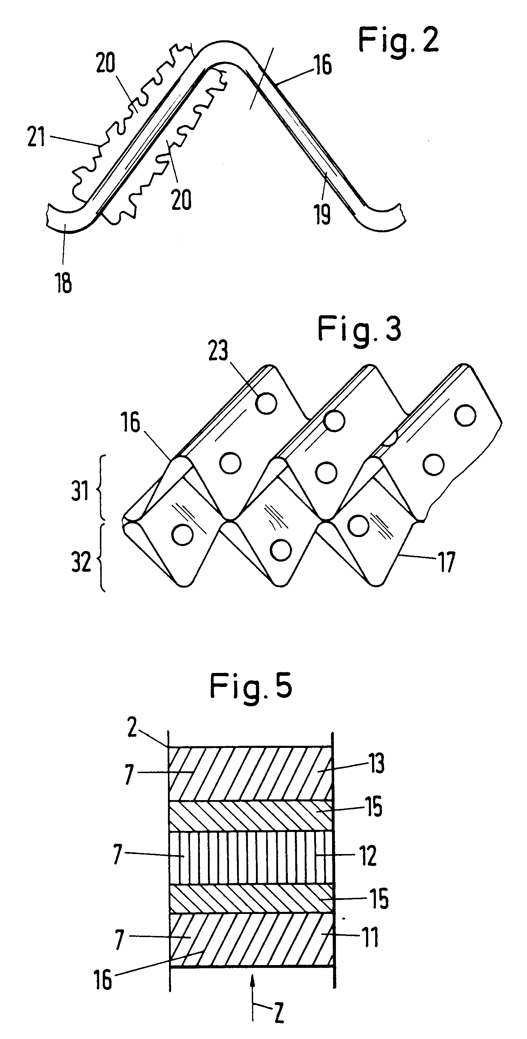

Der erfindungsgemässe Reaktor 1 für flüssige oder gasförmige Medien von Fig. 1 weist eine Reaktorwandung 2 einen Einlauf 3, einen Auslauf 4, eine nicht gezeigte Förderein-richtung und einen Katalysatorkörper 7 als Packung mit der Länge L auf. Der Katalysatorkörper besteht hier aus drei Stufen 11, 12, 13, welche je aus in parallelen Lagen angeordneten statischen Mischerelementen 16 bestehen. Wie an sich bekannt ist, weisen die statischen Mischerelemente 16 einen Neigungswinkel W, hier von mindestens 10°, zur Hauptströmungsrichtung Z auf. Dabei liegen die Lagen der Stufen 11 und 13 parallel zur Raumebene (Z,X) und die Lagen der Stufe 12 parallel zur Raumebene (Z,Y). Die Lagen sind abwechselnd in Richtung +W und -W ausgerichtet, so dass sich kreuzende Teilströme gebildet werden. Zwischen den Lagen wird damit eine grösstmögliche Vermischung bei geringem Druckabfall erreicht. Dies ist ersichtlich aus Fig. 3. Hier sind die statischen Mischerelemente 16 in der Form von wellenförmigen Schichten 17 ausgeführt und in den Lagen 31, 32 angeordnet. Dabei können diese Lagen 31, 32 aufeinander gestapelt sein. Im Prinzip können verschiedene an sich bekannte statische Mischerformen mit grossen Oberflächen eingesetzt werden. Die Trägerstrukturen können auch zusätzliche, die Vermischung fördernde und den Druckabfall reduzierende Durchtrittsöffnungen 23 aufweisen, oder sie können zur Vergrösserung der Oberfläche auch strukturiert, z.B. geriffelt sein.

Fig. 2 zeigt einen erfindungsgemässen Aufbau des Katalysatorkörpers mit einer Trägerstruktur in Form statischer Mischerelemente 16, welche aus einem Metallskelett 18, z.B. aus rostfreiem Stahlblech geformt, oder aus einer Keramikschicht 19 bestehen können. Auf diese Trägerstruktur 16 ist eine Washcoat-Beschichtung 20 aufgebracht. Und mindestens an der Oberfläche der Washcoat-Schicht 20 befindet sich der Katalysator 21. Mit der Washcoat-Beschichtung kann auf besonders einfache und kostengünstige Art eine grosse und einstellbare spezifische Oberfläche von z.B. 20 bis 200 m²/g und eine Oberflächenvergrösserung von z.B. 100 bis 100 000 m²/m² hergestellt werden. In Kombination mit der grossen Vermischungswirkung der Trägerstruktur kann somit quasi massgeschneidert eine optimale Reaktionsführung mit hoher Effizienz erreicht werden.

Fig. 4 zeigt an einem Beispiel schematisch den Verlauf einer katalytisch abzubauenden Konzentration C über die Reaktorlänge L in Hauptströmungsrichtung Z. Mit bisherigen Reaktoren wird ein Konzentrationsverlauf gemäss Kurve C1 mit einem als Schlupf verbleibenden schädlichen Restwert C3 am Ende L des Reaktors erreicht. Die Konzentration C2 des erfindungsgemässen Reaktors nimmt dagegen stärker und kontinuierlich bis zum Wert 0 ab, ohne dass am Ende des Reaktors L ein Schlupf auftritt. Normalerweise wird ein erfindungsgemässer Katalysatorkörper bzw. Reaktor für katalytische Reaktionen mit relativ geringer Wärmetönung eingesetzt. Um auch etwas höhere Wärmetönungen beherrschen zu können, kann der Katalysatorkörper 7 gemäss Fig. 5 in mehrere getrennte Abschnitte 11, 12, 13 aufgeteilt werden und zwischen die Abschnitte ein Wärmetauscher 15 eingefügt sein, welcher jeweils die Wärmetönung des vorangehenden Abschnitts zu- bzw. abführt.

## Patentansprüche

1. Katalysatorkörper, bestehend aus einer nicht als Wickelkörper ausgebildeten Trägerstruktur, die in Form einer Mehrzahl von parallel angeordneter, aufeinander gestapelter Schichten (17) aufgebaut ist, welche Schichten (17) längs einer Hauptströmungsrichtung (Z) ausgerichtet sind, wobei aufgrund wellen- oder zickzackförmiger Profilierung der Schichten sich geradlinige, gegeneinander offene sowie sich kreuzende Strömungskanäle ausbilden, und welche Schichten (17) mit einer Washcoat-Beschichtung (20) versehen sind, wobei mindestens deren Oberfläche einen Katalysator (21) enthält.

2. Katalysatorkörper nach Anspruch 1, dadurch gekennzeichnet, dass die Trägerstruktur aus wellenförmigen Schichten besteht, welche in parallelen Lagen (31, 32) angeordnet sind.

3. Katalysatorkörper nach Anspruch 1, dadurch gekennzeichnet, dass die Trägerstruktur aus einem Metallskelett (18), beispielsweise aus rostfreien Stahlblechen, besteht.

4. Katalysatorkörper nach Anspruch 1, dadurch gekennzeichnet, dass die Trägerstruktur eine Washcoat-Beschichtung (20) aus Erdalkali- und/oder Uebergangsmetalloxyden aufweist.

5. Katalysatorkörper nach Anspruch 1, dadurch gekennzeichnet, dass die Trägerstruktur eine Beschichtung aus Aluminiumoxyd Al2O3 aufweist.

6. Katalysatorkörper nach Anspruch 1, dadurch gekennzeichnet, dass die Trägerstruktur aus Vollkeramik-Material (19) wie Kordierit, Mullit, Steatit, Aluminiumoxyd oder Siliziumoxyd gebildet ist.

7. Katalysatorkörper nach Anspruch 1, dadurch gekennzeichnet, dass die Washcoat-Beschichtung (20) eine spezifische Oberfläche von 20 bis 200 m²/g aufweist.

8. Katalysatorkörper nach Anspruch 1, dadurch gekennzeichnet, dass die Beschichtung (20) eine Oberflächenvergrösserung von 100 bis 100 000 m²/g bezogen auf die geometrische Fläche aufweist.

9. Reaktor für katalytische Reaktionsführung mit einem Katalysatorkörper (7) nach einem der Ansprüche 1 bis 8.

10. Reaktor nach Anspruch 9, dadurch gekennzeichnet, dass der Katalysatorkörper mehrere Abschnitte (11, 12, 13) aufweist und dass zwischen den Abschnitten mindestens ein Wärmetauscher (15) angeordnet ist.

## Claims

1. A catalyst element consisting of a carrier structure not in the form of a coiled element, the carrier structure being built up in the form of a plurality of parallel strata (17) which are stacked one upon the other and which are aligned along a main direction of flow (Z), corrugated or zig-zag profiling of the strata resulting in rectilinear flow ducts which are open relatively to one another and cross one another, the said strata (17) being provided wit a washcoat covering (20), at least the surface thereof containing a catalyst (21).

2. A catalyst element according to claim 1, characterised in that the carrier structure consists of corrugated strata arranged in parallel layers (31, 32).

3. A catalyst element according to claim 1, characterised in that the carrier structure consists of a metal skeleton (18), e.g. of stainless steel sheets.

4. A catalyst element according to claim 1, characterised in that the carrier structure has a washcoat covering (20̸) consisting of oxides of alkaline earth and/or transition metals.

5. A catalyst element according to claim 1, characterised in that the carrier structure has a coating consisting of aluminium oxide Al₂O₃.

6. A catalyst element according to claim 1, characterised in that the carrier structure is formed from solid ceramic material (19) such as cordierite, mullite, steatite, aluminium oxide or silicon oxide.

7. A catalyst element according to claim 1, characterised in that the washcoat covering (20̸) has a specific surface of 20̸ to 20̸0̸ m²/g.

8. A catalyst element according to claim 1, characterised in that the covering (20̸) has a surface enlargement of 10̸0̸ to 10̸0̸ 0̸0̸0̸ m²/g with respect to the geometric area.

9. A reactor for catalytic reactions using a catalyst element (7) according to any one of claims 1 to 9.

10. A reactor according to claim 9, characterised in that the catalyst element has a plurality of portions (11, 12, 13) and at least one heat exchanger (15) is disposed between the portions.

## Revendications

1. Corps catalyseur se composant d'une structure porteuse qui n'est pas conformée en corps enroulé, qui est réalisée sous la forme de plusieurs couches parallèles et empilées (17), lesdites couches (17) étant orientées le long d'une direction principale de circulation (Z), dans lequel des canaux rectilignes de circulation, qui sont ouverts les uns sur les autres et qui se croisent, se forment en raison du profilage ondulé ou en zigzag des couches et lesdites couches (17) comportent un revêtement "Washcoat" (20), et dans lequel au moins la surface de ces dernières contient un catalyseur (21).

2. Corps catalyseur selon la revendication 1, caractérisé en ce que la structure porteuse se compose de couches ondulées qui sont disposées en bancs parallèles (31, 32).

3. Corps catalyseur selon la revendication 1, caractérisé en ce que la structure porteuse se compose d'un squelette métallique (18), par exemple de tôles d'acier inoxydable.

4. Corps catalyseur selon la revendication 1, caractérisé en ce que la structure porteuse comporte un revêtement "Washcoat" (20) à base d'oxydes alcalino-terreux et/ou de métaux transitoires.

5. Corps catalyseur selon la revendication 1, caractérisé en ce que la structure porteuse comporte un revêtement d'oxyde d'aluminium Al₂O₃.

6. Corps catalyseur selon la revendication 1, caractérisé en ce que la structure porteuse est formée d'une matière céramique pleine (19) telle que de la cordiérite, de la mullite, de la stéatite, de l'oxyde d'aluminium ou de l'oxyde de silicium.

7. Corps catalyseur selon la revendication 1, caractérisé en ce que le revêtement "Washcoat" (20) a une surface spécifique de 20 à 200 m²/g.

8. Corps catalyseur selon la revendication 1, caractérisé en ce que le revêtement (20) présente un agrandissement de surface de 100 à 100 000 m²/g par rapport à la surface géométrique.

9. Réacteur d'exécution de réactions catalytiques comprenant un corps catalyseur (7) selon l'une des revendications 1 à 8.

10. Réacteur selon la revendication 9, caractérisé en ce que le corps catalyseur comprend plusieurs parties (11, 12, 13) et en ce qu'au moins un échangeur de chaleur (15) est disposé entre les parties.
